**Europäisches Patentamt**

**European Patent Office**

**Office européen des brevets**

(19)

(11) Veröffentlichungsnummer: **0 164 047**
**B1**

(12) # EUROPÄISCHE PATENTSCHRIFT

(45) Veröffentlichungstag der Patentschrift:
**28.12.88**

(51) Int. Cl.⁴: **E 06 B 9/08, A 01 G 9/22**

(21) Anmeldenummer: **85106500.3**

(22) Anmeldetag: **26.05.85**

(54) Markise.

(30) Priorität: **29.05.84 DE 3419996**

(43) Veröffentlichungstag der Anmeldung:
**11.12.85 Patentblatt 85/50**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**FR-A- 1 292 241**
**FR-A- 1 362 321**
**NL-A- 8 300 660**

(73) Patentinhaber: **Markisenmarkt GmbH, Hauptstrasse 49, D-7000 Stuttgart 80 (DE)**

(72) Erfinder: **Limberg, Hans-Jörg, Am Hopfenrain 3, D-7000 Stuttgart 80 (DE)**

(74) Vertreter: **Wilhelm, Hans-Herbert, Dr.-Ing., Wilhelm & Dauster Patentanwälte Hospitalstrasse 8, D-7000 Stuttgart 1 (DE)**

ACTORUM AG

**Beschreibung**

Die Erfindung betrifft eine Markise nach dem Oberbegriff des Patentanspruchs 1.

Bei Markisen mit im wesentlichen in horizontaler Richtung verlaufendem Markisentuch ist es nicht möglich, das Abwickeln dieses Markisentuchs unter Ausnutzung seines Eigengewichts oder eines zusätzlich angebrachten Gewichts durchzuführen. Dieser Fall tritt dann auf, wenn das Markisentuch gegen die Horizontale um weniger als etwa 30° geneigt ist. In diesen Fällen behilft man sich damit, dass an dem der Wickelwelle abgewandten Ende des Markisentuchs Zugorgane angebracht werden, die zum Abwickeln des Markisentuchs, d.h. zum Öffnen der Markise, unter Zug gesetzt werden und somit das Abwickeln des Markisentuchs von der Wickelwelle ermöglichen. Üblicherweise werden hierbei zwei Zugorgane verwendet, die jeweils links und rechts an dem der Wickelwelle abgewandten Ende des Markisentuchs angreifen.

Bei einer derartigen Markise ist es nicht nur erforderlich, den für den Aufwickelvorgang notwendigen Antrieb für die Wickelwelle, der entweder durch einen in dieser Wickelwelle untergebrachten Elektromotor oder auch manuell über ein entsprechendes Getriebe erfolgen kann, vorzusehen; vielmehr muss auch ein Antrieb für die Zugorgane vorhanden sein. Aus der Druckschrift IC.02.38.02.26 der Firma Somfy GmbH ist es beispielsweise bekannt, eine der Wickelwelle gegenüberliegende zweite Welle vorzusehen, auf die beim Abwickelvorgang des Markisentuchs die Zugorgane – dort Gurte – aufgewickelt werden. Bei dieser Konstruktion ist für jede der beiden Wickelwellen ein Antrieb – in der Regel also ein Elektromotor – erforderlich, wobei beim Öffnen der Markise die der Wickelwelle für das Markisentuch gegenüberliegende Welle, die die Zugorgane aufwickelt, angetrieben werden muss und beim Schliessen der Markise die Wickelwelle für das Markisentuch selbst. Es wird also je nach Betriebsart jeweils nur einer der beiden Elektromotoren angetrieben, während der andere stromlos ist.

Eine derartige Markise ist konstruktiv aufwendig und teuer, dass nicht nur zwei Antriebe vorgesehen werden müssen, sondern überdies eine Umsteuerung, die je nach Betriebsart einen der beiden Antriebe aktiviert und den anderen stillegt. In der Regel werden also zwei Elektromotore und eine elektrische oder elektronische Umsteuerung erforderlich sein.

Es ist daher bereits nach Konstruktionen gesucht worden, bei denen nur ein Antrieb für das Markisentuch und die Zugorgane notwendig ist. Eine Markise, die nur einen Antrieb benötigt, ist beispielsweise aus der DE-PS 31 47 827 bekannt. Dort ist eine Umlenkeinrichtung vorgesehen, mittels derer die Zugorgane in Richtung auf die Wickelwelle hin umgelenkt werden. Beim Abwickeln wird das Markisentuch von oben von der Wickelwelle abgezogen. Gleichzeitig werden die Zugorgane von unten auf Gurtscheiben aufgewickelt, welche ebenfalls auf der Wickelwelle gelagert sind. Hierbei ergibt sich jedoch das Problem, das beim Ab- bzw. Aufwickeln der Markisentuchwickel bzw. die Gurtwickel verschiedenen Durchmesser haben, so dass bei einer bestimmten Winkelbewegung der Wickelwelle das Markisentuch und die Zugorgane in verschiedenen Längen ab- bzw. aufgewickelt werden. Beispielsweise hat beim Beginn des Abwickelvorgangs der Markisentuchwickel einen relativ grossen Durchmesser, während die Gurtwickel einen kleinen Durchmesser aufweisen. Bei einer Drehbewegung der Wickelwelle werden die Zugorgane daher nur wenig aufgewickelt, während gleichzeitig viel Markisentuch abgewickelt wird, so dass dieses durchhängt. Der umgekehrte Effekt stellt sich gegen Ende des Abwickelvorgangs ein, wenn der Markisentuchwickel nur einen geringen Durchmesser hat, die Gurtwicke dagegen einen grossen Durchmesser aufweisen. Dabei wird das Markisentuch unter starke Spannung gesetzt.

Zum Ausgleich der durch die gegenläufige Bewegung des Markisentuchs und der Zugorgane hervorgerufenen Wegdifferenzen sieht die DE-OS 31 47 827 daher einen Ausgleich zwischen dem Markisentuchwickel und den Gurtwickeln durch vorgespannte Federn vor. Eine derartige Anordnung ist jedoch konstruktiv und mechanisch ebenfalls sehr komplex aufgebaut; insbesondere kann der Einbau der vorgespannten Federn zu erheblichen Montageproblemen führen. Ein besonders schwerwiegender Nachteil besteht ferner darin, dass mit der in der DE-OS 31 47 827 beschriebenen Vorrichtung nur Markisen bis zu einer bestimmten Auszugslänge gebaut werden können, da bei grösseren Ausladungen die vorgespannten Federn nicht mehr in der Lage sind, die aufgrund der verschiedenen Wickeldurchmesser von Markisentuchwickel und Gurtwickeln entstehenden Wegdifferenzen auszugleichen. Wird das Markisentuch daher auf seine volle Länge ausgezogen, so wird es einer zu hohen Spannung ausgesetzt, so dass die Gefahr einer Beschädigung oder zumindest die Verkürzung der Lebensdauer besteht.

Durch die FR-A-1 362 321 ist zwar bei einem Lamellenverdeck, insbesondere für Eisenbahnwaggons, ein um Umlenkrollen geführtes endloses Zugelement bekannt, hierbei ist jedoch die Umlenkrolle (und nicht die Wickelwelle) mit einem Antrieb versehen, ferner enthält die Kupplung einen Freilauf, der in Abwickelbewegung (und nicht in Aufwickelbewegung) wirksam ist.

Die vorliegende Erfindung hat sich daher die Aufgabe gestellt, eine Markise der eingangs genannten Art so auszubilden, dass nur ein einziger Antrieb erforderlich ist, zugleich aber Markisen von nahezu beliebiger Ausladung hergestellt werden können.

Diese Aufgabe wird durch die im Patentanspruch 1 gekennzeichneten Merkmale gelöst.

Bei der erfindungsgemässen Markise verändert sich der Durchmesser des Markisentuchwickels, so dass beim Aufwickeln, wenn der Markisentuchwickel einen geringen Durchmesser hat, die Zugorgane schneller bewegt werden als das Markisentuch selbst. Dies würde dazu führen, dass das Markisentuch beim Aufwickeln immer mehr durchhängt, so dass eine ordnungsgemässe Aufwicklung nicht mehr gewährleistet ist. Die Erfindung sieht daher vor, dass zwischen den Rollen und der Wickelwelle jeweils ein Freilaufgetriebe angeordnet ist, welches die Rollen bei einer in Abwickelrichtung gerichteten Drehbewegung der Wickelwelle formschlüssig mitführt, bei einer in Aufwickelrichtung gerichteten Drehbewegung der Wickelwelle jedoch freigibt. Hierdurch wird erreicht, dass sich die Zugorgane beim Aufwickeln mit derselben Geschwindigkeit bewegen können wie das Markisentuch, da sich die Rolle beim Aufwickeln langsamer drehen kann als die Wickelwelle. Die durch die verschiedenen Durchmesser bedingten Wegdifferenzen werden also durch verschiedene Drehzahlen ausgeglichen. Die wesentlichen Kräfte werden beim Aufwickeln von de Wickelwelle auf das Markisentuch übertragen, nicht jedoch auf die Zugorgane. Umgekehrt liegt der Fall allerdings beim Abwickeln, wo die wesentlichen Kräfte von den Zugorganen ausgeübt werden.

Die erfindungsgemäss ausgebildete Markise gewährleistet also, dass das Markisentuch ohne Durchhängen aufgewickelt werden kann. Damit lassen sich Markisen von im Prinzip beliebiger Auszugslänge realisieren. Da ein Freilaufgetriebe technisch sehr einfach aufgebaut werden kann, ist die erfindungsgemässe Ausgestaltung daher auch einfacher und leichter herzustellen sowie zu montieren als die bisher bekannten Ausführungsformen.

Eine vorteilhafte Weiterbildung der Erfindung geht von der Überlegung aus, dass sich eine zweckmässige, einfach aufgebaute und stabile Zugvorrichtung ergibt, wenn die Zugorgane jeweils in sich geschlossen sind. Hierdurch erübrigt sich die Notwendigkeit, die Zugorgane gesondert aufzuwickeln. Zugleich ist eine sehr gute Kraftübertragung auch bei sehr grosser Ausladung der Markise gewährleistet. Aus diesem Grund sind die Zugorgane jeweils zweifach umgelenkt, und zwar jeweils über eine der Wickelwelle gegenüberliegende Umlenkrolle und eine wickelwellenseitig angeordnete Rolle. Die Enden der Zugorgane sind hierbei jeweils an der von der Wickelwelle abgewandten Seite des Markisentuchs angeschlagen. Hierzu gehört natürlich auch der Fall, dass die Zugorgane jeweils zu einer endlosen Schlaufe geschlossen sind, wobei das der Wickelwelle gegenüberliegende Ende des Markisentuchs an beliebigen Punkten dieser Zugorgane befestigt sein kann. Bei dieser Ausführungsform der Markise werden die Zugorgane somit über Rollen bzw. Umlenkrollen von stets gleichbleibendem Durchmesser geführt, da die Zugorgane nicht aufgewickelt werden. Als in sich geschlossene Zugorgane können nun auch Ketten, Zahnriemen u. dgl. verwendet werden, bei denen ein Aufwickeln auf eine Aufwickelrolle prinzipiell nicht möglich ist.

Das Freilaufgetriebe kann im Prinzip beliebig ausgebildet sein. In einer bevorzugten Ausführungsform umfasst das Freilaufgetriebe einen mit der Wickelwelle in beiden Drehrichtungen fest verbundenen Freilaufring, der wenigstens eine Ausnehmung aufweist, in die mit einer Kraft beaufschlagte Elemente, vorzugsweise Federelemente, eingreifen. Dieser Freilaufring ist sehr einfach herzustellen und leicht auf der Wickelwelle zu montieren. Auch besteht die Möglichkeit, durch einfaches Umdrehen des Freilaufringes aus einem rechtsdrehenden ein linksdrehendes Freilaufgetriebe aufzubauen und umgekehrt.

In vorteilhafter Weiterbildung sind die Ausnehmungen auf der Mantelfläche des Freilaufrings angeordnet und gehen in Umfangsrichtung auf einer Seite in die Mantelfläche über und weisen auf der gegenüberliegenden Seite einen Anschlag auf. Prinzipiell wäre es jedoch auch möglich, die Ausnehmungen seitlich an dem Freilaufring anzubringen. Die Anbringung an der Mantelfläche hat jedoch den Vorteil, dass die Federelemente in radialer Richtung an dem Freilaufring angreifen und sich hierbei an einem den Freilaufring radial umgreifenden Teil abstützen können.

In zweckmässiger Weiterbildung der Erfindung bestehen die Federelemente aus Druckfedern, die an ihrem dem Freilaufring zugewandten Ende jeweils in die Bohrung eines in radialer Richtung beweglichen Bolzens, der in Kontakt mit der Mantelfläche des Freilaufrings steht, eingesetzt sind. Die Verwendung dieser Bolzen garantiert eine gute Kontaktgabe zu den Ausnehmungen des Freilaufrings. Die Bolzen/Druckfedern können vorteilhaft jeweils in radialer Richtung verlaufenden Bohrungen eines die Rollen tragenden Trägerteils geführt sein, wobei sich die radial äusseren Enden der Druckfedern jeweils an die Trägerteile umgreifenden, mit diesen fest verbundenen Abdeckungen abstützen. Es ist natürlich auch möglich, die Bolzen lediglich unter der Einwirkung der Schwerkraft in die Ausnehmungen eingreifen zu lassen, wodurch der Einsatz der Federelemente überflüssig wird. Ein weiteres Problem bei der Verwendung in sich geschlossener Zugorgane stellt sich beim Abwickeln des Markisentuchs. Auch hier kann der Fall auftreten, dass der Markisentuchwickel einen wesentlich geringeren Durchmesser aufweist als die die Zugorgane führenden Rollen. Beim Abwickeln führt dies zu einer zunehmenden Spannung im Markisentuch. Bis zu einer gewissen Auszugslänge kann das Auftreten einer solchen Spannung toleriert werden und ist sogar erwünscht. Bei grösseren Auszugslängen werden die Spannungen im Markisentuch jedoch so hoch, dass die Gefahr von Beschädigungen oder Materialermüdungen auftritt. Um den hier benötigten Längenausgleich zwischen Markisentuch und Zugorgane zu schaffen, kann es im Prinzip genügen, die Zugorgane und die Rollen so auszubilden, dass die Zugorgane ab einer bestimmten Spannkraft auf den Rollen rutschen. Dies ist beispielsweise der Fall, wenn als Zugorgane Stahlseile und als Rollen Seilscheiben verwendet werden.

Nachteilig hierbei ist jedoch, dass die Zugorgane auf den Rollen scheuern, was zu Abnutzungserscheinigungen führt, und dass sich die Spannkraft, bei der ein Durchrutschen auftritt, nicht exakt einstellen lässt. Diese Spannkraft wird vielmehr durch die Vorspannung des Stahlseils bestimmt, wobei sich diese Vorspannung nur sehr schlecht einstellen und messen lässt.

Eine sehr vorteilhafte Weiterbildung der Erfindung sieht daher vor, dass die Rollen mit der Wickelwelle jeweils über eine Reibungs- oder Rutschkupplung verbunden sind. Diese Rutschkupplung kann bei Durchmesserdifferenzen zwischen dem Markisentuchwickel und den Rollen nachgeben, so dass beim Abwickeln ein Ausgleich der Wegdifferenzen zwischen Markisentuch und Zugorganen möglich ist. Vorteilhaft lässt sich bei dieser Reibungs- oder Rutschkupplung die wirksame Reibungskraft einstellen, so dass eine Anpassung je nach Bedarf möglich ist.

Der konstruktive Aufbau dieser Reibungs- oder Rutschkupplung wird besonders einfach, wenn die Rollen jeweils koaxial auf ein bei einer in Abwikkelrichtung gerichteten Drehbewegung der Wikkelwelle drehfest mit derselben verbundenes Trägerteil aufgesetzt sind und mit diesem über zumindest einen Reibbelag in Kontakt stehen. Der Reibbelag zwischen den Rollen und den jeweiligen Trägerteilen kann beispielsweise die Form eines Rings haben, der in radialer Richtung zwischen die jeweilige Rolle und das Trägerteil eingesetzt ist. Bei einer konstruktiv besonders einfachen Lösung, die eine leichte Montage gestattet und bei der auch sehr leicht die wirksame Reibungskraft eingestellt werden kann, wird der Kontakt zwischen den Trägerteilen und den Rollen jedoch durch zwei jeweils beidseitig an den Rollen anliegende, auf die Trägerteile axial aufgesetzte Reibscheiben hergestellt. Die Montage kann dann in der Weise erfolgen, dass zunächst die erste Reibscheibe auf das Trägerteil aufgeschoben wird, dann die Rolle und zuletzt die zweite Reibscheibe. Anschliessend kann beispielsweise eine Abdeckscheibe o. dgl. auf die zweite Reibscheibe aufgesetzt und mit dem Trägerteil verbunden werden, wobei die Befestigung dieser Abdeckscheibe beispielsweise mittels Schrauben an dem Trägerteil eine Einstellmöglichkeit für die wirksame Reibungskraft eröffnet, da die Schrauben verschieden stark angezogen werden können. Die Reibscheiben selbst bestehen bevorzugt aus Kunststoffmaterial mit widerstandsfähigen und bezüglich des Reibungskoeffizienten günstigen Eigenschaften, beispielsweise aus Polyurethan. In vorteilhafter Weiterbildung ist zwischen den Trägerteilen und den Rollen überdies jeweils ein in Umfangsrichtung verlaufender, vorzugsweise aus Kunststoff bestehender Gleitring angeordnet. Dieser Gleitring setzt die Reibung zwischen der Innenfläche der Rolle und dem Trägerteil herab, was erwünscht ist, da die Auslösung der Reibungskupplung lediglich durch den Kontakt der Rolle mit dem Reibscheiben eingestellt werden soll. Weitere Gleitringe können zwischen den Trägerteilen und der Wickelwelle, zwischen den Trägerteilen und den Freilaufringen und zwischen den Abdeckungen und den Freilaufringen angeordnet sein, wobei diese Gleitringe ebenfalls bevorzugt aus Kunststoff bestehen. Die metallischen Teile der erfindungsgemässen Markise werden dagegen bevorzugt aus nicht rostendem Metall, beispielsweise Aluminium, rostfreiem Stahl oder rostfreiem Federstahl (bei den Federelementen) hergestellt, da die Anordnung korrosionsbeständig gegen Witterungseinflüsse und Spritzwasser sein soll.

Eine vorteilhafte Ausführungsform der Erfindung sieht vor, dass auf die Rollen bzw. auf die diese Rollen einbeziehenden Seilscheiben jeweils ein Käfig lose aufgesetzt ist, an dem zwei Umlenkrollen gelagert sind, zwischen denen die beiden Enden des jeweiligen Zugorgans herausgeführt sind. Hierdurch wird eine saubere Führung der Zugorgane gewährleistet. Die Käfige können jeweils aus zwei im wesetlichen ringförmigen Scheiben bestehen, zwischen denen mehrere Rollen sowie die beiden Umlenkrollen vorzugsweise drehbar angeordnet sind. Auf diese Weise können die Rollen/Seilscheiben geschützt werden, und es kann ein Herausspringen der Zugorgane aus den sie führenden Rollen zuverlässig verhindert werden.

Weitere Merkmale und Vorteile der erfindungsgemässen Markise ergeben sich aus den Unteransprüchen sowie aus der Beschreibung zur Zeichnung, in der eine bevorzugte Ausführungsform der Erfindung dargestellt ist. Es zeigen:

Fig. 1a–1d Schematische Darstellungen zur Erläuterung der Arbeitsweise der Erfindung,

Fig. 2 eine perspektivische Gesamtansicht einer erfindungsgemässen Markise,

Fig. 3 die Seitenansicht der Wickelwelle und der ihr zugeordnete Organe mit der Seilzugführung,

Fig. 4 einen Querschnitt durch einen Rollwagen,

Fig. 5 die perspektivische Ansicht einer zusammengebauten Seilscheibe,

Fig. 6 eine Explosionsdarstellung der Seilscheibe der Fig. 5,

Fig. 7 einen halbseitigen Schnitt durch eine Seilscheibe,

Fig. 8 einen Querschnitt durch einen Freilaufring,

Fig. 9 die perspektivische Darstellung eines Federlements,

Fig. 10 die perspektivische Darstellung eines die Seilscheibe umgebenden Käfigs und

Fig. 11 eine Darstellung eines Freilaufgetriebes mit einer in Aufwickeleinrichtung wirkenden Bremse.

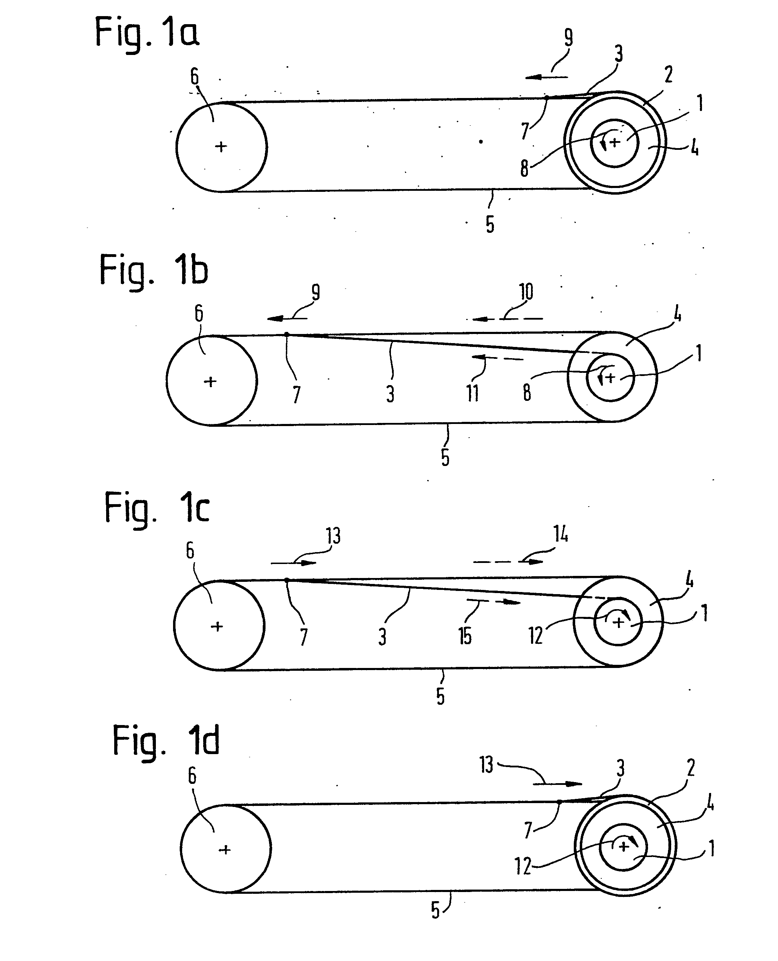

In den Fig. 1a bis 1d ist das Prinzip der Erfindung anhand schematischer Darstellungen gezeigt. Die Wickelwelle, auf die das Markisentuch aufgewickelt wird, ist mit 1 bezeichnet. Auf diese Wickelwelle ist der in der Fig. 1a mit 2 bezeichnete Markisentuchwickel aufgewickelt. Das Markisentuch selbst ist mit 3 bezeichnet.

Koaxial auf der Wickelwelle angeordnet ist eine Seilscheibe 4, über die ein Zugorgan – hier ein Stahlseil 5 – gelegt ist. Dieses Stahlseil ist in sich geschlossen und über eine der Wickelwelle 1 gegenüberliegende Umlenkrolle 6 geführt. An dem Punkt 7 ist das Markisentuch an dem Stahlseil befestigt.

Die Fig. 1a bis 1d zeigen die Seilscheibe, das Stahlseil und die Umlenkrolle jeweils nur in einfacher Ausführung. In der praktischen Realisierung sind diese Elemente jeweils zweifach vorgesehen, und zwar sowohl links als auch rechts des Markisentuchs.

Die Fig. 1a zeigt das Markisentuch in aufgewikkeltem Zustand. Soll die Markise nun ausgefahren, d.h. das Markisentuch abgewickelt werden, so wird die Wickelwelle 1 in Richtung des Pfeils 8 angetrieben, so dass sich sowohl das Markisentuch 3 als auch das Stahlseil 5 in Richtung des Pfeils 9 bewegt. Bei Beginn des Abwickelvorgangs, wie ihn die Fig. 1a zeigt, haben die Seilscheibe 4 und der Markisentuchwickel 2 nahezu denselben Durchmesser. Bei einer Drehbewegung der Wickelwelle 1 um einen bestimmten Winkel bewegen sich somit sowohl das Markisentuch als auch das Stahlseil um etwa denselben Betrag in Abwickelrichtung.

Anders liegt der Fall jedoch, wenn das Markisentuch nahezu abgewickelt ist. Diesen Zustand zeigt die Fig. 1b. Der Markisentuchwickel hat nun einen wesentlich geringeren Durchmesser – in der Fig. 1b fällt er mit dem Wickelwellendurchmesser zusammen – als die Seilscheibe 4. Die Folge ist, dass bei einer Drehbewegung der Wickelwelle 1 um einen bestimmten Winkel wesentlich mehr Stahlseil transportiert wird als Markisentuch, wie dies schematisch durch die unterbrochenen Pfeile 10 und 11 dargestellt ist. Mit zunehmender Abwicklung des Markisentuchs wird daher die auf dieses ausgeübte Spannkraft immer grösser. Dieser Effekt ist einerseits erwünscht, da das Markisentuch beim Abwickeln bis zu einem gewissen Grad gespannt werden soll. Bei grösserer Ausladung der Markise, insbesondere bei Ausladungen von mehreren Metern, werden die auftretenden Spannkräfte jedoch zu gross. Es ist daher erforderlich, einen Längenausgleich zwischen Markisentuch und Stahlseil herbeizuführen. Dieser Längenausgleich kann beispielsweise dadurch erfolgen, dass das Stahlseil 5 auf der Seilscheibe 4 rutschen kann, so dass die Spannung im Markisentuch nicht grösser werden kann als die zwischen dem Stahlseil und der Seilscheibe auftretende Reibungskraft. Vorteilhafter ist es jedoch, zwischen der Seilscheibe 4 und der Wickelwelle 1 eine Reibungs- oder Rutschkupplung vorzusehen, die eine definierte und genau zu dosierende Einstellung der Reibungskräfte ermöglicht. Die Ausbildung einer derartigen Reibungskupplung wird im folgenden noch beschrieben werden.

Den Fall des Aufwickelns der Markise bei noch ausgefahrenem Markisentuch zeigt die Fig. 1c. Die Wickelwelle 1 wird nun (manuell oder motorisch) in Richtung des Pfeils 12 angetrieben. Das Stahlseil und das Markisentuch bewegen sich folglich in Richtung des Pfeils 13. Da in dem in der Fig. 1c gezeigten Fall der Durchmesser des Markisentuchwickels ebenfalls wesentlich geringer ist als der Durchmesser der Seilscheibe, bewegt sich das Stahlseil 5 bei einer Drehung der Wickelwelle um einen bestimmten Winkel wesentlich schneller als das Markisentuch 3. Dieser Sachverhalt ist durch die gestrichelten Pfeile 14 und 15 angedeutet. Die Folge der unterschiedlichen Geschwindigkeiten des Stahlseils und des Markisentuchs wäre, dass das Markisentuch langsamer transportiert wird und deshalb durchhängt. Ein einwandfreies Aufwickeln des Markisentuchs wäre daher nicht mehr gewährleistet.

Die Erfindung sieht daher ein Freilaufgetriebe zwischen der Wickelwelle und der Seilscheibe vor, wobei aufgrund dieses Freilaufgetriebes die Seilscheibe 4 bei einer Drehbewegung der Wickelwelle 1 in Richtung des Pfeils 12 von dieser nicht mitgeführt wird. Die Folge ist, dass sich die Seilscheibe 4 langsamer drehen kann als die Wickelwelle 1. Das Markisentuch kann nun ohne Durchhängen aufgewickelt werden. Die Kraftübertragung von der Wickelwelle 1 auf den Punkt 7 erfolgt beim Aufwickeln also im wesentlichen über das Markisentuch 3 und nicht wie beim Abwickeln über das Stahlseil 5.

Die konstruktive Ausbildung der Reibungskupplung wird im folgenden noch ausführlich beschrieben werden.

In der Fig. 1d ist das Ende des Aufwickelvorgangs gezeigt. Hierbei haben der Markisenwickel 2 und die Seilscheibe 4 wieder nahezu denselben Durchmesser, so dass Probleme aufgrund der Wegdifferenzen von Stahlseil und Markisentuch nicht auftreten können.

Das Prinzip der Erfindung ist vorstehend anhand von Stahlseilen und Seilscheiben beschrieben. Natürlich können als Zugorgane bzw. Rollen auch andere Elemente wie Gurte und Gurtscheiben eingesetzt werden.

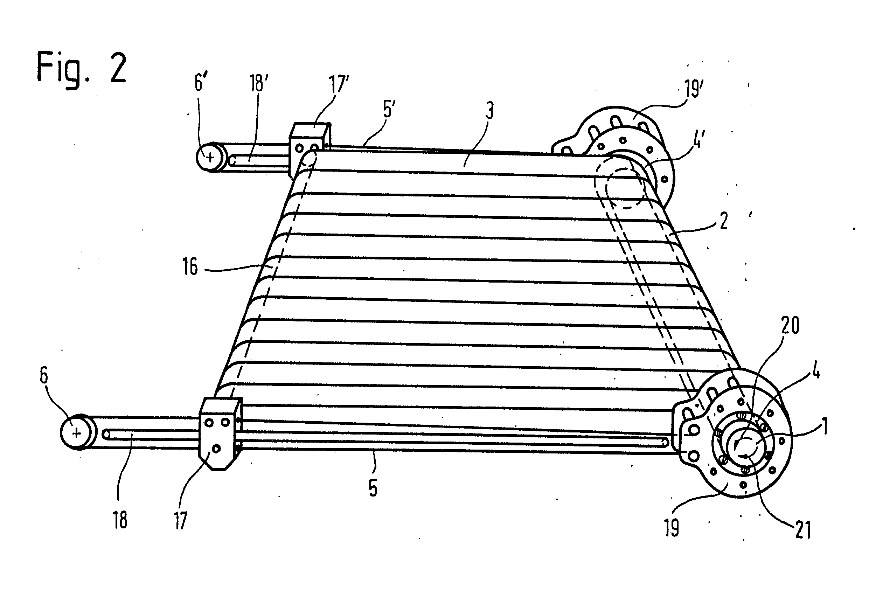

Die Fig. 2 zeigt eine perspektivische Ansicht einer erfindungsgemässen Markise in einer praktischen Ausführungsform. Die Bezugszeichen der Fig. 1a bis 1d wurden teilweise beibehalten. Das Markisentuch 3 wird von einer Wickelwelle 1 abgewickelt, wobei das der Wickelwelle abgewandte Ende des Markisentuchs an einer Spannstange 16 angeschlagen ist. Diese Spannstange ist mit zwei Rollwagen 17 und 17' verbunden, welche längs Führungsstangen 18 und 18' geführt sind. Statt dieser Führungsstangen ist es natürlich auch möglich, die Rollwagen 17 und 17' längs Führungsschienen o.dgl. zu führen.

An den Rollwagen 17, 17' sind umlaufende Stahlseile 5, 5' angeschlagen, die auf der der Wickelwelle abgewandten Seite über Umlenkrollen 6, 6' geführt sind. Ihr unteres Trum ist lose durch die Rollwagen 17, 17' geführt, kann aber auch seitlich oder unterhalb dieser Rollwagen geführt sein. Wickelwellenseitig sind die Stahlseile 5, 5' über die hier als Seilscheiben ausgeführten Rollen 4, 4' geführt, welche in noch zu erläuternder Weise mit einer gegenüber der Wickelwelle 1 wirkenden Rutschkupplung und einem Freilaufgetriebe ausgerüstet sind. Die Seilscheiben 4, 4' sind von Käfigen 19, 19' umgeben, die ebenfalls zur Führung der Stahlseile 5, 5' dienen und im folgenden noch näher beschrieben werden.

Die Lagerung der Wickelwelle 1 und der Umlenkrollen 6, 6' ist aus Darstellungsgründen nicht gezeigt und kann in an sich bekannter Weise erfolgen. Dies gilt auch für die Abstützung der Führungsstangen 18, 18'. Die Wickelwelle 1 ist ferner an einen hier nicht gezeigten Antrieb angeschlossen, dessen Drehrichtung umkehrbar ist und der daher eine Bewegung der Wickelwelle in beiden Drehrichtungen ermöglicht. Der Antrieb kann sowohl manuell als auch motorisch erfolgen. Bevorzugt wird ein in die Wickelwelle 1 eingebauter Elektromotor eingesetzt.

Das Markisentuch ist im gezeigten Ausführungsbeispiel in horizontaler Richtung ausfahrbar. Die Erfindung beschränkt sich jedoch nicht nur auf diesen Fall, sondern auch auf Markisen, bei denen das Markisentuch einen von 0° verschiedenen Winkel zur Horizontalebene einnimmt. Auch eine abgewinkelte Führung der Markise ist denkbar, beispielsweise zuerst horizontal und dann vertikal, oder eine bogenförmige Führung.

Wird die Wickelwelle 1 in Richtung des Pfeils 20 angetrieben, so wird diese Drehbewegung von den Seilscheiben 4, 4' auf die Stahlseile 5, 5' und damit auch auf das Markisentuch 3 übertragen, so dass dieses Markisentuch abgewickelt wird. Beim Antrieb der Wickelwelle 1 in Richtung des Pfeils 21 wird dagegen ein Aufwickeln des Markisentuchs erreicht. Der Ausgleich der aufgrund des verschiedenen Durchmessers des Markisenwickels und der Seilscheiben auftretenden Wegdifferenzen erfolgt in noch näher zu erläuternder Weise über eine Reibungskupplung und ein Freilaufgetriebe. Der Seilscheibendurchmesser ist im Anwendungsfall stets grösser als der Durchmesser des Markisentuchwickels.

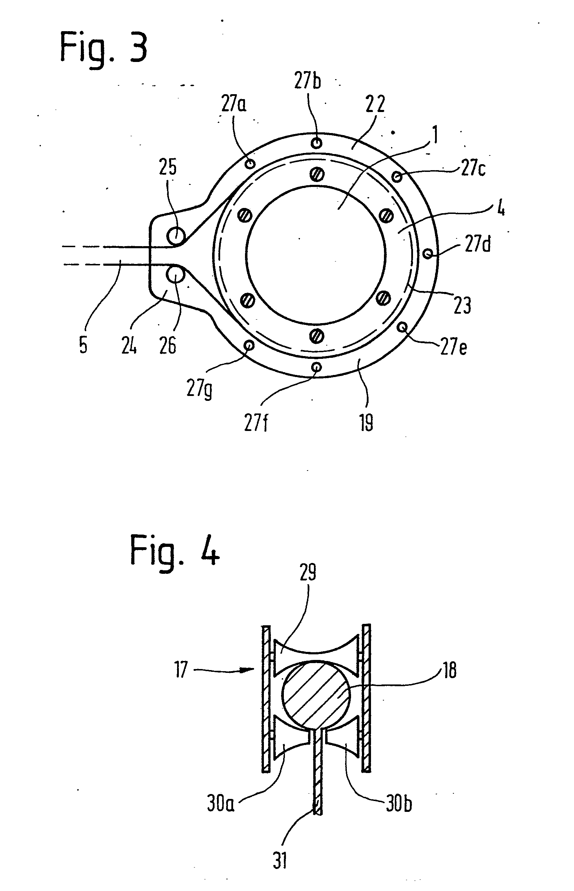

Die Fig. 3 zeigt in einer Stirnansicht der Wickelwelle die Seilzugführung in diesem Bereich. Aus Darstellungsgründen wurde die dem Betrachter zugewandte Scheibe des Käfigs 19 hierbei abgenommen.

Zu erkennen ist jedoch die hintere Scheibe 22 des Käfigs 19. Der Aussendurchmesser der Seilscheibe 4 ist etwas grösser als der Innendurchmesser der Scheibe 22; der innere Rand der Scheibe 22 ist in der Fig. 3 gestrichelt angedeutet und mit 23 bezeichnet. An der Scheibe 22 sind an einem Vorsprung 24 derselben Umlenkrollen 25 und 26 drehbar gelagert. Über diese Umlenkrollen ist das Stahlseil 5 geführt. Es legt sich dann an den Aussen-Umfang der Seilscheibe 4 an. Die Umlenkrollen 25 und 26 haben somit die Aufgabe, für eine zu der Führungsstange 18 (Fig. 2) annähernd parallele Führung des Stahlseils 5 zu sorgen. An der Scheibe 22 sind weitere Rollen 27a bis 27g vorzugsweise drehbar gelagert. Diese Rollen befinden sich radial ausserhalb der Seilscheibe 4. Der ganze Käfig 19 ist lose auf die Seilscheibe 4 aufgesetzt. Er dient zum Schutz dieser Seilscheibe und verhindert ein Abspringen des Stahlseils 5 von dieser Seilscheibe. Ausserdem ermöglicht er durch die Umlenkrollen 25 und 26 eine der Geometrie angepasste Führung des Stahlseils 5.

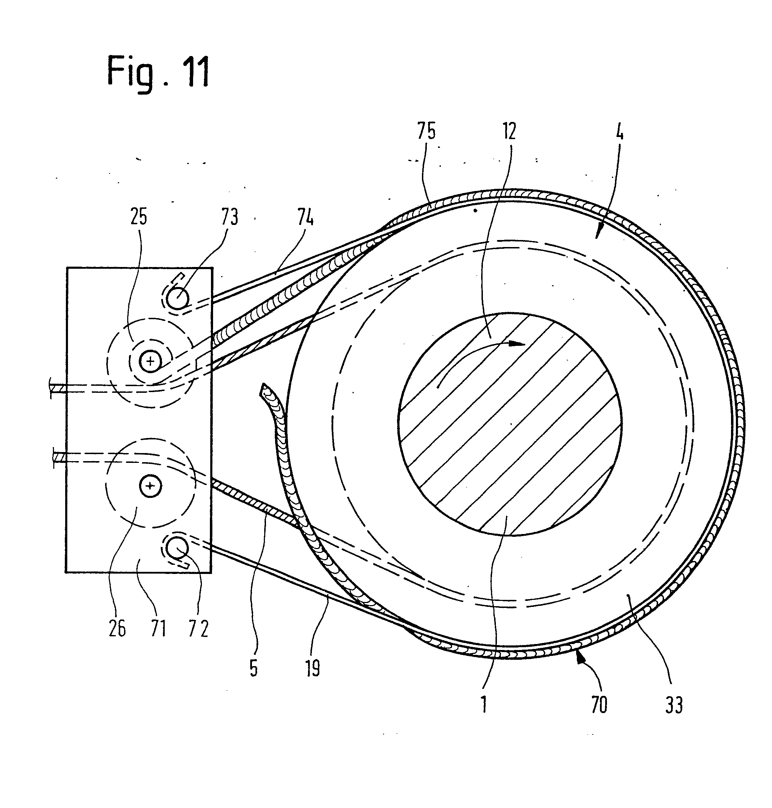

Der Käfig 19 ist ohne die Seilscheibe und das Stahlseil nochmals in der Fig. 10 perspektivisch dargestellt. Hier ist ausser der ersten Scheibe 22 auch die zweite Scheibe 28 zu erkennen. Die U-förmigen Nuten der Umlenkrollen 25 und 26, in denen das Seil geführt wird, tragen die Bezugsziffern 25' und 26'.

Die Fig. 4 zeigt einen Querschnitt durch den Rollwagen 17 senkrecht zur Führungsstange 18. Eine an dem Rollwagen drehbar gelagerte und in ihrem Profil der Führungsstange 18 angepasste Rolle 29 sitzt auf der Führungsstange und stützt den Rollwagen ab. In der Fig. 4 ist nur eine Rolle 29 zu erkennen; wie Fig. 2 zeigt, sind jedoch zwei derartige Rollen vorgesehen, um ein Verkanten des Rollwagens auf der Führungsstange zu verhindern. Unterhalb der Führungsstange 18 sind an dem Rollwagen 17 zwei ebenfalls in ihrem Profil der Führungsstange 18 angepasste Halbrollen 30a und 30b vorgesehen, die für eine verbesserte Führung des Rollwagens sorgen. Der verbleibende Zwischenraum zwischen den Halbrollen 30a und 30b ermöglicht das Überfahren von in der Fig. 2 nicht gezeigten Abstützungen 31 für die Führungsstange 18.

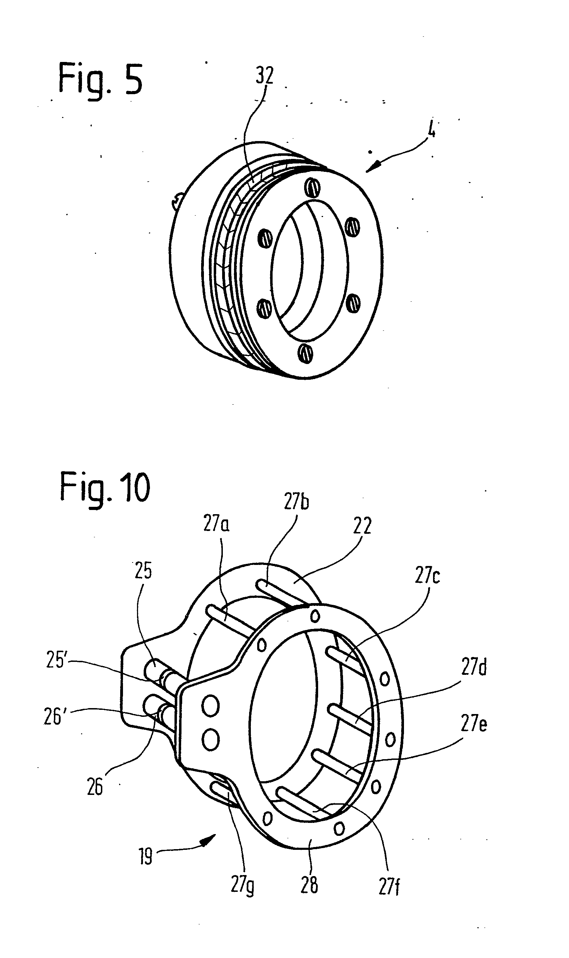

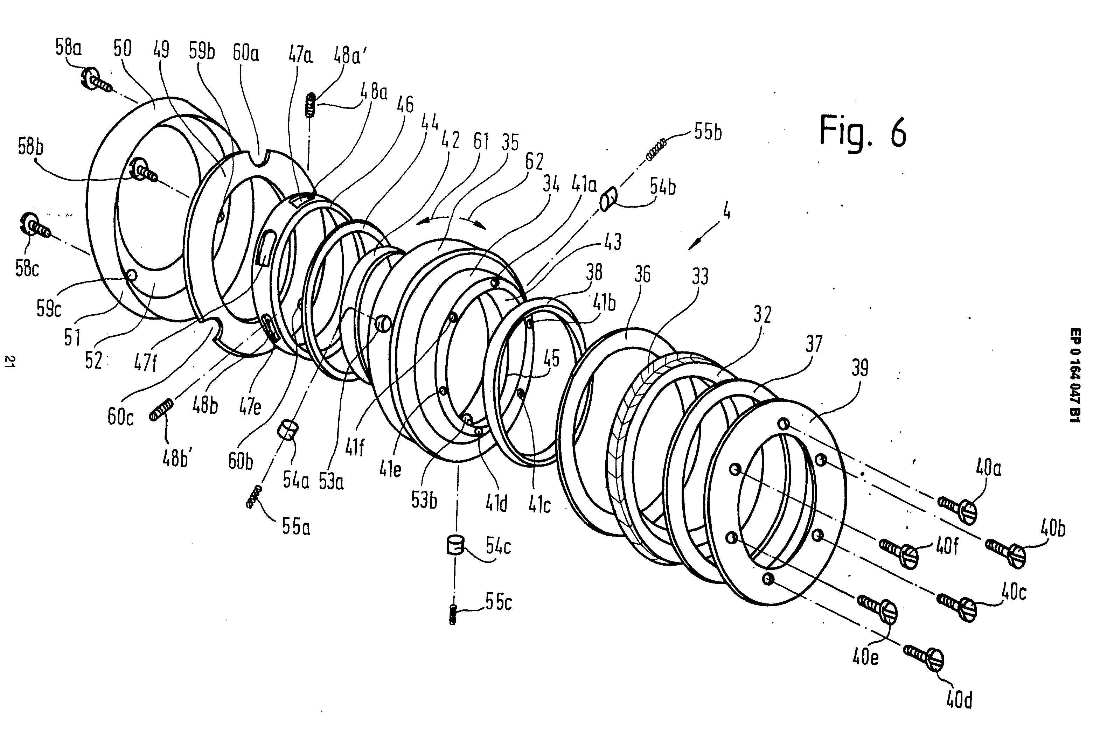

Eine Seilscheibe 4 ist in der Fig. 5 in perspektivischer Darstellung gezeigt. Diese Seilscheibe weist eine Rolle 32 auf, in deren umlaufender, im Querschnitt V-förmiger Nut das Seil 5 geführt wird. Die Seilscheibe 4 übernimmt gegenüber der Wickelwelle 1 die Funktionen der Reibungskupplung und des Freilaufgetriebes, wie im folgenden anhand der Explosionsdarstellung einer demontierten Seilscheibe gemäss Fig. 6 erläutert werden wird.

Die Rolle 32 der Seilscheibe 4 ist, wie bereits erläutert, mit einer umlaufenden, im Querschnitt V-förmigen Nut 33 versehen, in der das Stahlseil 5 geführt wird. Bei der Montage wird auf den Flansch 34 eines Trägerteils 35 zunächst eine Reibscheibe 36 aufgeschoben. Diese Reibscheibe besteht ebenso wie eine zweite Reibscheibe 37 aus Kunststoff- oder Gummimaterial mit den gewünschten Reibeigenschaften, vorzugsweise aus Polyurethan. Nach dem Aufschieben der Reibscheibe 36 auf den Flansch 34 wird auf diesen Flansch als nächstes ein aus Kunststoff bestehender Gleitring 38 aufgeschoben. Dieser Gleitring besteht bevorzugt aus Teflon oder einem teflonähnlichen Material. Sein Aussendurchmesser entspricht dem Innendurchmesser der Rolle 32, die nun auf diesen Gleitring aufgeschoben wird. Sodann wird die Reibscheibe 37 auf den Flansch 34 aufgeschoben. Die beiden Reibscheiben liegen nun seitlich an der Rolle 32 an. Zum Schluss wird ein Abschlussdeckel 39 aufgesetzt und mittels Schrauben 40a bis 40f, die in Gewindebohrungen 41a bis 41f des Flansches 34 eingeschraubt werden, an dem Trägerteil 35 befestigt.

Die Rolle 32 ist nun gegenüber dem Trägerteil 35 gleitend gelagert und reibt seitlich an den Reibscheiben 36 und 37. Die somit gebildete Reibungskupplung ermöglicht ein Nachgeben der Seilscheibe bei dem in Fig. 1b dargestellten Abwickeln des Markisentuchs. Durch die Anzugskraft der Schrauben 40a bis 40f lässt sich die auf die Seilscheibe 32 ausgeübte Reibungskraft den gewünschten Erfordernissen anpassen.

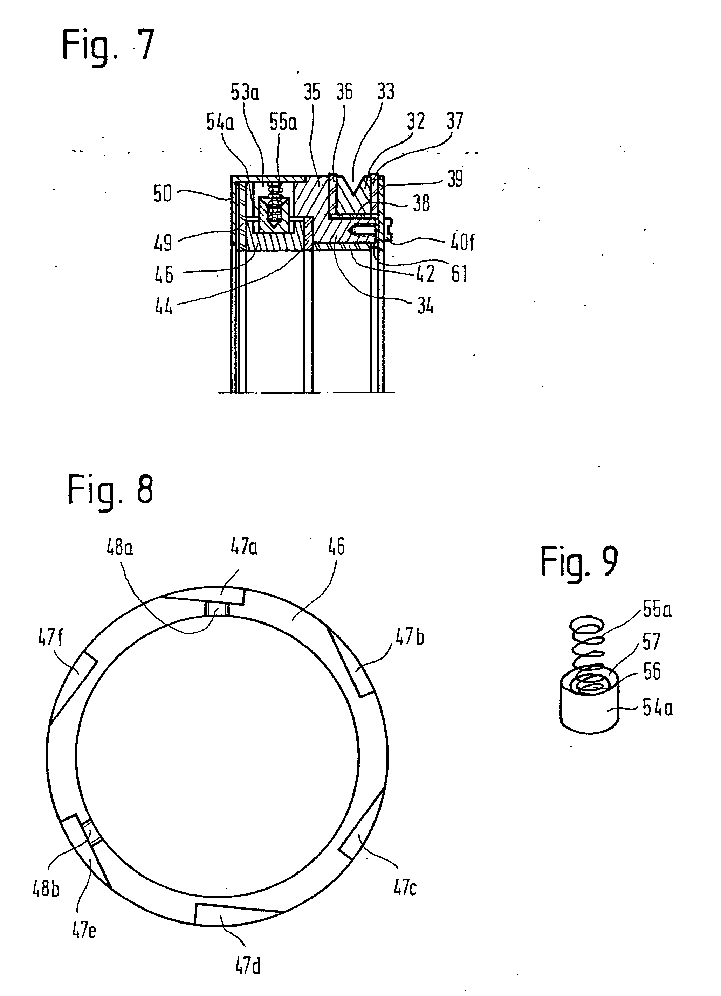

Bei der Montage der Seilscheibe 4 wird in diese als nächstes ein Gleitring 42 eingesetzt, der an der inneren Fläche 43 des Flansches 34 zur Anlage kommt. Zur Sicherung gegen ein Verrutschen dieses Gleitrings weist der Flansch 34 einen umlaufenden Vorsprung auf, an dem der Gleitring 42 anliegt. Dieser umlaufende Vorsprung ist in der Fig. 6 aus Darstellungsgründen nicht gezeigt, wird aber anhand der Fig. 7 erläutert werden. Der Gleitring 42 liegt bei der Montage der Seilscheibe 4 auf der Wickelwelle 1 direkt auf dieser auf und ermöglicht eine freie Drehbarkeit des Trägerteils 35 gegenüber der hier nicht gezeigten Wickelwelle.

Ein weiterer Gleitring 44 wird gemäss der Darstellung der Fig. 6 von hinten in das Trägerteil 35 eingeführt und liegt an der Kante 45 an. Dieser Gleitring sichert die freie Drehbarkeit des Trägerteils 35 gegenüber einem Freilaufring 46.

Vor der weiteren Montage der Seilscheibe 4 muss nun der Freilaufring 46 drehfest mit der in Fig. 6 nicht gezeigten Wickelwelle verbunden werden. Der Freilaufring 46 weist, wie auch der Querschnitt durch diesen Ring in Fig. 8 zeigt, mehrere Ausnehmungen 47a bis 47f auf, die auf der Mantelfläche dieses Freilaufrings angeordnet sind und auf einer Seite in die Mantelfläche übergehen, auf der gegenüberliegenden Seite dagegen einen Anschlag aufweisen. Der Anschlag selbst ist, wie Fig. 6 zeigt, nicht achsparallel ausgebildet, sondern in der Draufsicht halbkreisförmig, kann jedoch aus Herstellungsgründe (gleichzeitige Bearbeitung mehrerer Freilaufringe) auch achsparallel ausgebildet sein)

Zwei dieser Ausnehmungen – die Ausnehmungen 47a und 47e – sind ausserdem mit durchgehenden Gewindebohrungen 48a und 48b versehen, in die, wie in der Fig. 6 gezeigt, Inbusschrauben 48a', 48b' eingeschraubt werden können. Diese Inbusschrauben verklemmen den Freilaufring 46 bei der Montage auf der Wickelwelle. Da sie keinen Kopf besitzen, weisen die Ausnehmungen 47a und 47e nach dem Einschrauben eine nahezu ebene Fläche auf. Es ist natürlich auch möglich, den Freilaufring mit nur einer Inbusschraube oder mit mehr als drei Inbusschrauben auf der Wickelwelle festzulegen, wobei im letzten Fall jedoch noch weitere Gewindebohrungen erforderlich wären.

Nach dem Festschrauben des Freilaufrings 46 auf der Wickelwelle werden die bis dahin zusammengebauten Teile der Seilscheibe 4 auf die Wikkelwelle und den Freilaufring aufgeschoben. Von der anderen Seite der Wickelwelle wird anschliessend ein weiterer Gleitring 49 aufgeschoben, der für eine freie Drehbarkeit des Freilaufrings 46 gegenüber einer Abdeckung 50 sorgt. Bevor diese, ein Mantelteil 51 und eine mit diesem verbundene Scheibe 52 aufweisende Abdeckung auf das Trägerteil 35 aufgeschoben wird, müssen jedoch noch die Federelemente eingesetzt werden.

Das Trägerteil 35 ist mit drei in radialer Richtung durchgehenden Bohrungen versehen, von denen in der Darstellung der Fig. 6 nur zwei erkennbar und mit 53a und 53b bezeichnet sind. In diese Bohrungen werden nun die Federelemente eingeführt. Die Federelemente bestehen jeweils aus mit Bohrungen versehenen Bolzen 54a, 54b und 54c sowie aus nicht-rostendem Stahl hergestellten Druckfedern 55a, 55b und 55c. Der Aufbau des aus dem Bolzen 54a und der Druckfeder 55a bestehenden Federelements ist in perspektivischer Darstellung auch nochmals in der Fig. 9 gezeigt. Dort ist die Bohrung 56 des Bolzens deutlich zu erkennen und auch die Anfasung 57. Die Bolzen sind bevorzugt aus nicht-rostendem Stahl und die Druckfedern aus nicht-rostendem Federstahl hergestellt, um eine Korrosion beispielsweise aufgrund auftreffenden Spritzwassers zu verhindern.

Die aus dem Bolzen und Druckfedern bestehenden Federelemente werden nun in der in Fig. 6 gezeigten Weise die Bohrungen des Trägerteils 35 eingesetzt. Anschliessend wird die Abdeckung 50 über das Trägerteil 35 geschoben, wobei sich die hinteren Enden der Druckfedern 55a bis 55c an der Innenseite des Mantelteils 51 der Abdeckung 50 abstützen. Zum Schluss werden drei Schrauben 58a bis 58c in in der Fig. 6 nicht erkennbare Gewindebohrungen des Trägerteils 35 eingeschraubt, so dass die Abdeckung 50 fest mit diesem Trägerteil verbunden ist. Die Scheibe 52 der Abdeckung 50 weist hierzu Durchgangsbohrungen auf, von denen zwei erkennbar und mit 59b und 59c bezeichnet sind; die Gleitscheibe 49 besitzt entsprechende Ausnehmungen 60a, 60b und 60c.

Nach der Montage liegen die Bolzen 54a bis 54c auf der Mantelfläche des Freilaufrings 46 auf. Bei einer Drehung des Trägerteils 35 greifen sie in die Ausnehmungen 47a bis 47f auf der Mantelfläche des Freilaufrings ein. Aufgrund der Anschläge der Ausnehmungen ist eine Drehung des Trägerteils 35 gegenüber dem Freilaufring 46 in Richtung des Pfeils 61 möglich, nicht dagegen in Richtung des Pfeils 62. Diese Ausbildung ermöglicht es, dass sich die Wickelwelle mit dem Freilaufring 46 in Drehrichtung 62 schneller drehen kann als das Trägerteil 35. Dies ist der beim Aufwickeln gemäss Fig. 1c angestrebte Effekt, durch den ein Durchhängen des Markisentuchs verhindert wird.

Die gezeigte Ausbildung des Freilaufgetriebes hat auch den Vorteil, dass keine recht- und linkslaufenden Seilscheiben vorgesehen werden müssen. Um die in der Fig. 2 mit 4' bezeichnete Seilscheibe aufzubauen, kann wie in Fig. 6 gezeigt vorgegangen werden, lediglich der Freilaufring 46 muss umgedreht werden.

Die Gleitscheiben der Seilscheibe sind aus Kunststoff mit günstigen Gleiteigenschaften, beispielsweise Teflon oder teflonähnlichem Material, hergestellt. Für die Herstellung der Reibbeläge 36 und 37 wird bevorzugt Polyurethan verwendet. Die Rolle 32, die Abdeckscheibe 39, das Trägerteil 35, der Freilaufring 46 und die Abdeckung 50 werden aus vorzugsweise nicht-rostendem Metall hergestellt, um Korrosion und Rost zu verhindern. Sie sind insbesondere aus Leichtmetall wie Aluminium o.dgl. hergestellt.

Bei einer erfindungsgemässen Ausgestaltung der Markise kann nicht nur, wie in Fig. 2 gezeigt, ein ebener Auszug der Markise erreicht werden. Bei entsprechender Führung des Markisentuchs und der Zugorgane ist beispielsweise auch eine halbkreisförmige Führung möglich. Statt der Rutschkupplung kann auch vorgesehen werden, dass die Zugorgane lediglich auf einer entsprechenden Rolle rutschen können; schliesslich ist es auch möglich, dass Freilaufgetriebe anders auszubilden.

Die Elemente der Seilscheibe 4 sind nochmals in halbseitigem Querschnitt in Fig. 7 gezeigt. Der Querschnitt durch die zusammengebaute Seilscheibe ist hierbei durch die Bohrung 53a des Trägerteils 35 gelegt, so dass nochmals der Aufbau der Federelemente erkennbar wird. Die Fig. 7 zeigt ausserdem den an dem Flansch 34 umlaufenden Vorsprung 61, der die Gleitscheibe 42 in ihrer Position arretiert. Der in der Fig. 7 erkennbare Spalt zwischen dem Trägerteil 35 und dem Freilaufring 46 ermöglicht das freie Spiel dieser Teile gegeneinander und dient unter anderem auch zum Ausgleich eventueller Herstellungstoleranzen.

Verschiedene Abänderungen oder Ergänzungen der erfindungsgemässen Markise sind denkbar und möglich. Werden die Zugorgane nicht aufgewickelt (beispielsweise auf als Gurtwickel ausgebildete Rollen), so können statt eines Seils oder eines Gurts auch Ketten, Zahnriemen oder ähnliche Kraftübertragungselemente eingesetzt werden. Anstelle der Seilscheibe und der Umlenkrolle werden dann Kettenräder verwendet, wobei zweckmässigerweise das anstelle der Umlenkrolle eingesetzte Kettenrad mit einer Einrichtung zum Einstellen der Vorspannung versehen ist. Bei dieser Ausführungsform kann sich kein Schlupf ergeben, so dass die Kraftübertragung weiter verbessert wird. Die Verwendung von Ketten o.dgl. ist bei den bisher bekannten Ausführungsformen prinzipiell nicht möglich, da sich derartige Ketten oder Zahnriemen aufwickeln lassen.

Die Montage der erfindungsgemässen Markise lässt sich weiterhin dadurch vereinfachen, dass die Gewindebohrungen 48a und 48b nicht im Bereich der Ausnehmungen 47a und 47e angeordnet sind, sondern in axialer Richtung versetzt zu diesen Ausnehmungen. Wird die Abdeckung 50 mit einer entsprechenden Zugangsöffnung versehen, so ist es dann möglich, die Seilscheibe vollständig vorzumontieren und bei der Montage vor Ort den Freilaufring 46 auf der Wickelwelle im bereits eingebauten Zustand festzulegen. Hierzu wird der Freilaufring 46 gegenüber der Abdeckung 50 gedreht, bis die Gewindebohrungen durch die entsprechende Öffnung der Abdeckung erreichbar sind. Durch diese Öffnung hindurch kann dann die Inbusschraube gesteckt und mittels eines ebenfalls durch die Öffnung der Abdeckung 50 eingeführten Imbusschlüssels festgeschraubt werden.

Statt eines Rollwagens kann auch eine hohle Führungsstange verwendet werden, in der Rollen laufen, an denen die Spannstange gelagert ist.

Die gezeigte Konstruktion der Seilscheibe gestattet es, die Rolle 32 beliebig auszutauschen. Es können daher je nach Anwendungsfall Rollen mit verschiedenem Durchmesser eingesetzt werden. Ausserdem ist es möglich, anstelle einer Rolle mit V-förmiger Nut auch eine als Kettenrad ausgebildete Rolle (bei der Anwendung von Ketten oder Zahnriemen als Zugorgane) o.dgl. einzusetzen.

Die Verwendung endloser Zugorgane hat gegenüber der aus der DE-OS 31 47 827 bekannten Ausführungsform auch den Vorteil, dass unabhängig von der Stellung des Markisentuchs stets dasselbe Antriebsdrehmoment notwendig ist. Bei der bekannten Ausführungsform ist dies nicht der Fall, da die dort vorgesehene Feder gespannt werden muss.

In Fig. 11 ist eine vereinfachte Ausführungsform eines Käfigs 19 dargestellt, der den Bereich der Führungsnut 33 des Stahlseils 5 des Freilaufgetriebes 4 abdeckt. Vor der die Führungsnut 33 enthaltenen Rolle 12 ist das Stahlseil 5 mit zwei Führungsrollen 25 und 26 geführt, die die beiden Trums des Stahlseils 5 so zusammenführen, dass sie parallel zueinander zur Umlenkstelle führen und dass sie auch so dicht beieinander liegen, dass sie beispielsweise innerhalb einer Profilschiene laufen können. Die beiden Führungsrollen 25 und 26 sind mit ihren Achsen in einem Rahmen 71 gelagert, der mit zwei Bolzen 72 und 73 versehen ist, in die ein Band 74 mit seinen Enden eingehängt ist, das die Führungsnut 33 abdeckt.

In der Praxis kann es passieren, dass die Markise beispielsweise bei einer starken Windbelastung eingefahren wird, d.h. das Markisentuch 3 aufgewickelt wird. Es kann dann der Fall auftreten, dass aufgrund der auf das Markisentuch 3 anstehenden Windbelastung die Seilscheiben 4 trotz des in Aufwickelrichtung wirksamen Freilaufs wenigstens so schnell wie die Wickelwelle 1 mitdrehen, so dass das Ende des Markisentuches 3 (Punkt 7 in Fig. 1) sich mit grösserer Geschwindigkeit als Wickelgeschwindigkeit bewegt. Um diesen Effekt bei dem Aufwickeln zu verhindern, wird entsprechend der Ausführungsform nach Fig. 11 eine Bremseinrichtung 70 vorgesehen, die nur in Aufwickelrichtung 12 der Wickelwelle wirksam ist. An dem Rahmen 71, der unter allen Betriebsbedingungen stationär steht, ist ein Federelement 75 angelenkt, das unter einer leichten Vorspannung um eine zylindrische Fläche der Seilscheibe geschlungen ist, insbesondere um die zylindrische Fläche der mitdrehenden Abdeckung 50. Dieses Federelement besteht aus einer dünnen, um ihre Längsachse gewickelten Spiralfeder, die mit einer oder mehreren Windungen um die Abdeckscheibe 50 geschlungen ist. Zwischen der Abdeckscheibe 50 und dem Federelement 75 besteht eine Reibwirkung. Bei einem Antrieb der Wickelwelle 1 in Aufwickelrichtung 12 wird die Seilscheibe aufgrund der sich mit dem Ende 7 des Markisentuches 3 bewegenden Stahlseils 5 mitgenommen.

Um diese Bewegung zu bremsen und um damit sicherzustellen, dass sich das Stahlseil 5 nicht zu schnell bewegt, ist das Federelement 75 in Aufwickelrichtung um die Abdeckscheibe geschlungen. Bei einer Bewegung der Abdeckscheibe 5 der Seilrolle 4 in Aufwickelrichtung 12 wird das Federelement 75 aufgrund der auftretenden Reibungskräfte gespannt und legt sich dann mit einer verstärkten Kraft gegen die Abdeckscheibe an, die der gewünschten Bremswirkung entspricht. In der entgegengerichteten Drehrichtung dagegen wird das aus der gewickelten Spiralfeder bestehende Federelement 75 gestaucht, so dass das Federelement 5 von der Abdeckscheibe 50 gelöst wird, so dass damit die Reibung und die Bremswirkung verringert werden.

Es wird ausdrücklich darauf hingewiesen, dass der in Vorstehendem im Zusammenhang mit einer Markise erläuterte Antrieb, der zwei Seilscheiben 4 mit einem Freilaufgetriebe enthält, selbstverständlich auch bei ähnlichen Einrichtungen anwendbar ist, beispielsweise bei Verdunklungsvorhängen oder Verdunklungsbahnen o.dgl.

**Patentansprüche**

1. Markise mit einer Wickelwelle (1) für ein Markisentuch (3) und mit Mitteln zum Antreiben der Wickelwelle (1) in Aufwickelrichtung und zum Antreiben von wenigstens einem Ende des Markisentuches (3) angeifenden und dieses von der Wickelwelle (1) abziehenden Zugelement (5), dadurch gekennzeichnet, dass die Wickelwelle (1) mit einem Antrieb versehen ist, und dass auf der Wickelwelle (1) eine Antriebsrolle (4, 32) für das endlos geführte, am Ende der Markise um eine Umlenkrolle (6) laufende Zugelement (5) angeordnet ist, wobei die Antriebsrolle (4, 32) mit der Wickelwelle (1) über eine Kupplung verbunden ist, die einen in Aufwickelrichtung wirksamen, d.h. vorhandenen Freilauf enthält.

2. Markise nach Anspruch 1, dadurch gekennzeichnet, dass die Kupplung zwischen der Antriebsrolle (4, 32) und der Wickelwelle (1) eine Rutschkupplung ist.

3. Markise nach Anspruch 1 und 2, dadurch gekennzeichnet, dass die Rutschkupplung und der Freilauf als ein in die Antriebsrolle (4, 32) eingebautes Kupplungselement ausgebildet sind.

4. Markise nach Anspruch 1, dadurch gekennzeichnet, dass das Freilaufgetriebe aus einem mit der Wickelwelle (1) in beiden Drehrichtungen fest verbundenen Freilaufring (46) besteht, der wenigstens eine Ausnehmung (47a–47f) aufweist, in die mit einer Kraft beaufschlagte Elemente, vorzugsweise Federelemente, eingreifen.

5. Markise nach Anspruch 4, dadurch gekennzeichnet, dass die Ausnehmungen (47a–47f) auf der Mantelfläche des Freilaufrings (46) angeordnet sind und in Umfangsrichtung auf einer Seite in die Mantelfläche übergehen und auf der gegenüberliegenden Seite einen Anschlag aufweisen.

6. Markise nach Anspruch 5, dadurch gekennzeichnet, dass die Federelemente aus Druckfedern (55a, 55b, 55c) bestehen, die an ihrem dem Freilaufring (46) zugewandten Ende jeweils in die Bohrung eines in radialer Richtung beweglichen Bolzens (54a, 54b, 54c) der in Kontakt mit der Mantelfläche des Freilaufrings (46) steht, eingesetzt sind.

7. Markise nach einem oder mehreren der Ansprüche 4 bis 6, dadurch gekennzeichnet, dass die Bolzen (54a, 54b, 54c)/Druckfedern (55a, 55b, 55c) jeweils in in radialer Richtung verlaufenden Bohrungen (53a, 53b, 53c) eines die Rollen (32) tragenden Trägerteils (35) geführt sind und dass sich die radial äusseren Enden der Druckfedern (55a, 55b, 55c) jeweils an die Trägerteile (35) umgreifenden, mit diesen fest verbundenen Abdeckungen (50) abstützen.

8. Markise nach wenigstens einem der Ansprüche 4 bis 7, dadurch gekennzeichnet, dass zwischen den Trägerteilen (35) und der Wickelwelle (1) und/oder zwischen den Trägerteilen (35) und den Freilaufringen (46) und/oder zwischen den Abdeckungen (50) und den Freilaufringen (46) jeweils vorzugsweise aus Kunststoff bestehende Gleitringe (42; 44; 49) angeordnet sind.

9. Markise nach wenigstens einem der Ansprüche 4 bis 7, dadurch gekennzeichnet, dass die Freilaufringe (46) und/oder die Trägerteile (35) und/oder die Abdeckungen (50) aus Leichtmetall, insbesondere Aluminium, bestehen.

10. Markise nach einem der Ansprüche 2–9, dadurch gekennzeichnet, dass die Rollen (32) jeweils koaxial auf ein bei einer in Abwickelrichtung gerichteten Drehbewegung der Wickelwelle (1) drehfest mit derselben verbundenes Trägerteil (35) aufgesetzt sind und mit diesem über zumindest einen Reibbelag in Kontakt stehen.

11. Markise nach Anspruch 10, dadurch gekennzeichnet, dass der Kontakt zwischen den Trägerteilen (35) und den Rollen (32) durch jeweils zwei beidseitig an den Rollen (32) anliegende, auf die Trägerteile (35) axial aufgesetzte Reibscheiben (36, 37) hergestellt wird.

12. Markise nach Anspruch 11, dadurch gekennzeichnet, dass die Reibscheiben (36, 37) aus Polyurethan bestehen.

13. Markise nach Anspruch 11 oder 12, dadurch gekennzeichnet, dass zwischen den Trägerteilen (35) und den Rollen (32) jeweils ein in Umfangsrichtung verlaufender, vorzugsweise aus Kunststoff bestehender Gleitring (38) angeordnet ist.

14. Markise nach wenigstens einem der vorhergehenden Ansprüche, dadurch gekennzeichnet, dass auf die Rollen (32) jeweils ein Käfig (19) lose aufgesetzt ist, an dem zwei Umlenkrollen (25, 26) gelagert sind, zwischen denen die beiden Enden des jeweiligen Zugorgans (5, 5') herausgeführt sind.

15. Markise nach Anspruch 14, dadurch gekennzeichnet, dass die Käfige (19) jeweils aus zwei im wesentlichen ringförmigen Scheiben (22, 28) bestehen, zwischen denen mehrere Rollen (27a–27g) sowie die beiden Umlenkrollen (25, 26) vorzugsweise drehbar angeordnet sind.

16. Markise nach einem oder mehreren der vorhergehenden Ansprüche, dadurch gekennzeichnet, dass die Zugorgane (5, 5') Seile, insbesondere Stahlseile, sind.

17. Markise nach Anspruch 16, dadurch gekennzeichnet, dass die Rollen (32) und/oder die Umlenkrollen (6, 6') mit einer umlaufenden, im Querschnitt etwa V-förmigen Nut (33) versehen sind.

18. Markise nach einem oder mehreren der vorhergehenden Ansprüche, dadurch gekennzeichnet, dass die Enden der Zugorgane (5, 5') jeweils an einem Rollwagen (17) befestigt sind, dass diese Rollwagen (17) an Führungseinrichtungen, vorzugsweise Führungsstangen (18) oder Führungsschienen, geführt sind und dass an den Rollwagen (17) das der Wickelwelle (1) abgewandte Ende des Markisentuchs (3) angreift.

19. Markise nach Anspruch 18, dadurch gekennzeichnet, dass die Rollwagen (17) über eine Spannschiene (16) verbunden sind, an der das Markisentuch (3) angeschlagen ist.

20. Markise nach einem oder mehreren der vorhergehenden Ansprüche, dadurch gekennzeichnet, dass die Rollen (32) aus Leichtmetall, insbesondere Aluminium, hergestellt sind.

21. Markise nach einem oder mehreren der Ansprüche 1 bis 20, dadurch gekennzeichnet, dass einem Teil (50) des Freilaufgetriebes eine vorzugsweise nur in Aufwickelrichtung wirkende Bremseinrichtung (70) zugeordnet ist.

**Claims**

1. Awning with a winding shaft (1) for an awning cloth (3) and with means for driving the winding shaft (1) in take-up direction and for driving at least one pulling member (5) engaging at the end of the awning (1), characterized in that the winding shaft (1) is provided with a drive, and in that, on the winding shaft (1) a drive roller (4, 32) is provided for the pulling member (5) endlessly guided and rotating at the end of the awning around a deflection sheave (6), the drive roller (4, 32) being connected with the winding shaft (1) by means of a coupling which contains a free-wheel operating in take-up direction.

2. Awning according to Claim 1, characterized in that the coupling between the drive roller (4, 32) and the winding shaft (1) is a sliding coupling.

3. Awning according to Claims 1 and 2, characterized in that the sliding coupling and the free-wheel are constructed as a coupling member incorporated into the drive roller (4, 32).

4. Awning according to Claim 1, characterized in that the free-wheel gearing consists of a free-wheel ring (46) rigidly connected with the winding shaft (1) in both directions of rotation, which ring has at least one recess (47a–47f), into which there engage elements impinged with a force, preferably spring-mounted elements.

5. Awning according to Claim 4, characterized in that the recesses (47a–47f) are provided on the surface area of the free-wheel ring (46) and, in the circumferential direction, on one side, merge into the surface area and, on the opposite side, have a stop.

6. Awning according to Claim 5, characterized in that the spring elements consist of compression springs (55a, 55b, 55c) which, on their side facing the free-wheel ring (46) respectively engage into the hole of a bolt movable in radial direction (54a, 54b, 54c) which is in contact with the surface area of the free-wheel ring (46).

7. Awning according to one or more of Claims 4 to 6, characterized in that bolts (54a, 54b, 54c) and compression springs (55a, 55b, 55c) are passed respectively in holes (53a, 53b, 53c), extending in radial direction, of a carrier part (35) supporting the rollers (32), and in that the radially outer ends of the compression springs (55a, 55b, 55c) rest respectively on coverings (50) gripping the carrier parts (35) and firmly connected therewith.

8. Awning according to at least one of Claims 4 to 7, characterized in that, between the carrier parts (35) and the winding shaft (1), and/or between the carrier parts (35) and the free-wheel rings (46), and/or between the coverings (50) and the free-wheel rings (46), sliding rings (42, 44, 49), made preferably of plastic material, are mounted.

9. Awning according to at least one of Claims 4 to 7, characterized in that the free-wheel rings (46) and/or the carrier parts (35) and/or the coverings (50) are made of light metal, particularly aluminium.

10. Awning according to one of Claims 2 to 9, characterized in that the rollers are respectively mounted coaxially onto a carrier part (35) which, on a rotational movement of the winding shaft (1) in the unwinding direction, is connected solid in rotation with it, and are in contact with said carrier part through at least one friction lining.

11. Awning accoding to Claim 10, characterized in that the contact between the carrier parts (35) and the rollers (32) is produced by respectively two friction discs (36, 37) applying on both sides against the rollers (32) and axially mounted on the carrier parts (35).

12. Awning according to Claim 11, characterized in that the friction discs (36, 37) are of polyurethane.

13. Awning according to Claim 11 or 12, characterized in that between the carrier parts (35) and the rollers there is respectively mounted a sliding ring (38) running in the circumferential direction and made preferably of plastic material.

14. Awning according to at least one of the foregoing claims, characterized in that there is respectively loosely mounted on the rollers (32) a cage (19) on which two deflection sheaves (25 26) are mounted, between which the two ends of the respective pulling member (5, 5') is passed.

15. Awning according to Claim 14, characterized in that the cages (19) respectively consist of two substantially annular plates (22, 28) between which several rollers (27a–27g) as well as the two deflection sheaves (25, 26) are preferably rotatably mounded.

16. Awning according to one or more of the foregoing claims, characterized in that the pulling members (5, 5') are cables, preferably steel cables.

17. Awning according to Claim 16, characterized in that the rollers (32) and/or the deflection sheaves (6, 6′) are provided with a circumferential groove (33) which is substantially V-shaped in cross-section.

18. Awning according to one or more of the foregoing claims, characterized in that the ends of the pulling members are respectively fixed to a rolling carriage (17), in that said rolling carriage (17) are guided on guiding devices, preferably guide rods (18) or guide rails, and in that the end of the awning cloth (3) facing away from the winding shaft (1) engages onto the rolling carriage (17).

19. Awning according to Claim 18, characterized in that the rolling carriages (17) are joined through a tension rail (16) over which the awning cloth (3) is thrown.

20. Awning according to one or more of the foregoing claims, characterized in that the rollers (32) are made of light metal, particularly aluminium.

21. Awning according to one or more of Claims 1 to 20, characterized in that a braking device (70), preferably operating in the take-up direction, is associated with a part (50) of the free-wheel gearing.

## Revendications

1. Store comportant un arbre d'enroulement (1) pour une toile de store (3) et des moyens pour actionner l'arbre d'enroulement (1) dans la direction de l'enroulement ainsi que pour actionner au moins un élément de traction (5) fixé à l'extrémité de la toile de store (3) et la déroulant de l'arbre d'enroulement (1) caractérisé en ce que l'arbre d'enroulement (1) est pourvu d'une commande et qu'un rouleau d'entraînement (4, 32) pour l'élément de traction (5) conduit sans fin et passant sur un rouleau de renvoi (6) à l'extrémité du store, est disposé sur l'arbre d'enroulement (1), le rouleau d'entraînement (4, 32) étant relié à l'arbre d'enroulement (1) par un couplage comprenant une roue libre qui agit dans la direction de l'enroulement, c'est-à-dire vers l'avant.

2. Store selon la revendication 1, caractérisé en ce que le couplage entre le rouleau d'entraînement (4, 32) et l'arbre d'enroulement (1) est un embrayage progressif à friction.

3. Store selon les revendications 1 et 2, caractérisé en ce que l'embrayage progressif à friction et la roue libre sont agencés sous forme d'un élément de couplage monté dans le rouleau d'entraînement.

4. Store selon la revendication 1, caractérisé en ce que le mécanisme de roue libre consiste en une bague libre (46), solidarisée de l'arbre d'enroulement (1), dans les deux directions de rotation et présentant au moins un évidement (47a–47e) dans lequel interviennent des éléments soumis à une force, de préférence des éléments à ressort.

5. Store selon la revendication 4, caractérisé en ce que les évidements (47a–47e) sont disposés à la périphérie de la bague libre (46), affleurant d'un côté la surface externe et présentant une butée du côté opposé.

6. Store selon la revendication 5, caractérisé en ce que les éléments à ressort consistent en ressorts de compression (55a, 55b, 55c) respectivement montés à leur extrêmité tournée vers la bague libre (46) dans l'alésage d'un goujon (54a, 54b, 54c) mobile en direction radiale et se trouvant en contact avec la surface externe de la bague libre (46).

7. Store selon une ou plusieurs des revendications 4 à 6, caractérisé en ce que les goujons (54a, 54b, 54c) / ressorts de compression (55a, 55b, 55c) sont respectivement guidés dans des alésages (53a, 53b, 53c), s'étendant un direction radiale, d'une pièce support (35) portant les rouleaux (32) et que les extrêmités radialement externes des ressorts de compression (55a, 55b, 55c) s'appuient respectivement sur des capots (50) coiffant les pièces support (35) et solidarisés d'elles.

8. Store selon l'une au moins des revendications 4 à 7, caractérisé en ce que des anneaux de guidage (42, 44, 49), de préférence en matière synthétique, sont respectivement disposés entre les pièces support (35) et l'arbre d'enroulement (1) et/ou entre les pièces support (35) et les bagues libres (46) et/ou entre les capots (50) et les bagues libres (46).

9. Store selon l'une au moins des revendications 4 à 7, caractérisé en ce que les bagues libres (46) et/ou les pièces support (35) et/ou les capots (50) sont en métal léger, particulièrement en aluminium.

10. Store selon l'une des revendications 2 à 9 caractérisé en ce que les rouleaux (32) sont respectivement posés coaxialement sur une pièce support (35) reliée d'une manière résistante à la torsion à l'arbre d'enroulement (1) lorsque celui-ci exerce un mouvement de rotation dirigé dans la direction du déroulement et se trouvent en contact avec cette pièce support par au moins une garniture de frottement.

11. Store selon la revendication 10, caractérisé en ce que le contact entre les pièces support (35) et les rouleaux (32) est établi respectivement au moyen de deux plateaux de friction (36, 37) ajustés de chaque côté des rouleaux (32) et posés axialement sur les pièces support (35).

12. Store selon la revendication 11, caractérisé en ce que les plateaux de friction (36, 37) sont réalisés en polyuréthane.

13. Store selon la revendication 11 ou 12, caractérisé en ce qu'un anneau de guidage fin (38), de préférence en matière synthétique, est respectivement disposé entre les pièces support (35) et les rouleaux (32).

14. Store selon l'une au moins des revendications précédentes, caractérisé en ce qu'une cage (19), sur laquelle sont montés deux rouleaux de renvoi (25, 26) entre lesquels sortent les deux extrêmités de l'organe de traction respectif (5, 5′) est posée librement sur chacun des rouleaux.

15. Store selon la revendication 14, caractérisé en ce que les cages (19) consistent en deux flancs (22, 28) de forme essentiellement annulaire entre lesquels sont disposés, de préférence pivotants, plusieurs rouleaux (27a–27g) ainsi que les deux rouleaux de renvoi (25, 26).

16. Store selon une ou plusieurs revendications précédentes, caractérisé en ce que les organes de traction (5, 5') sont des câbles, plus particulièrement des câbles d'acier.

17. Store selon la revendication 16, caractérisé en ce que les rouleaux (32) et/ou les rouleaux de renvoi (6, 6') sont pourvus d'une gorge (33) circonférentielle de section transversale sensiblement en forme de V.

18. Store selon une ou plusieurs revendications précédentes, caractérisé en ce que les extrémités des organes de traction (5, 5') sont respectivement fixées à un chariot (17), que les chariots (17) sont guidés sur des installations de guidage, de préférence des tiges de guidage (18) ou des rails de guidage et que l'extrémité de la toile de store (3) opposée à l'arbre d'enroulement (1) est fixée sur le chariot (17).

19. Store selon la revendication 18, caractérisé en ce que les chariots (17) sont reliés par une entretoise (16) sur laquelle est fixée la toile de store.

20. Store selon une ou plusieurs revendications précédentes, caractérisé en ce que les rouleaux (32) sont réalisés en métal léger, en particulier en aluminium.

21. Store selon une ou plusieurs des revendications 1 à 20, caractérisé en ce qu'une installation de freinage (70), n'agissant de préférence qu'en direction de l'enroulement, est adjointe à une pièce (50) du mécanisme de roue libre.

## Fig. 1a

## Fig. 1b

## Fig. 1c

## Fig. 1d

Fig. 2

EP 0 164 047 B1

# Fig. 3

# Fig. 4

Fig. 5

Fig. 10

Fig. 6

# Fig. 7

# Fig. 8

# Fig. 9

# Fig . 11